# EUROPÄISCHE PATENTSCHRIFT

(11) **EP 1 674 779 B1**
(45) Veröffentlichungstag und Bekanntmachung des Hinweises auf die Patenterteilung: **03.03.2010**
(21) Anmeldenummer: 05026995.0
(22) Anmeldetag: 09.12.2005
(51) Int. Cl.: F16L 37/084

(54) **Verbindungseinrichtung**
Pipe coupling
Raccord pour tuyau

(30) Priorität: 23.12.2004 DE 102004062207
(43) Veröffentlichungstag der Anmeldung: 28.06.2006
(73) Patentinhaber: Fränkische Rohrwerke Gebr. Kirchner GmbH + Co KG, 97486 Königsberg/Bayern (DE)
(72) Erfinder: Lorenz, Sven, 97437 Hassfurt/Sylbach (DE)
(74) Vertreter: Muschke, Markus Artur Heinz

(56) Entgegenhaltungen:
- EP-A- 0 575 865
- BE-A- 479 098
- DE-C- 4 300 037
- US-A- 1 484 807
- US-A- 5 536 047

## Beschreibung

Die Erfindung betrifft eine Verbindungseinrichtung mit einem Gehäuse und mit einem Verriegelungselement, um ein zylindrisches Anschlusselement, insbesondere einen Stutzen oder dgl., aufzunehmen, wobei ein Betätigungselement zur Entriegelung des Verriegelungsleementes über eine Öffnung im Gehäuse zugänglich ist und wobei das Verriegelungselement wenigstens einen Halteabschnitt umfasst, gemäß dem Oberbegriff des Patentanspruchs 1.

Derartige Verbindungseinrichtungen oder Fluidkonnektoren sind im Stand der Technik hinlänglich bekannt. Soll beispielsweise eine Verbindungsleitung, insbesondere ein Wellrohr oder dgl., mit seinem Stutzen an ein Anschlusselement reversibel angeschlossen werden, so werden entsprechende reversible Konnektoren verwendet, um den Anschlussstutzen des Rohres an einen dazu korrespondierenden Anschlussabschnitt anzuschließen.

Beispielsweise ist aus der EP 0 756 125 A1 ein Anschlusskonnektor für Rohre bekannt, bei dem in Axialrichtung des Konnektors erstreckte Federarme mit Rastschultern einen korrespondierenden Haltering am Anschlusselement hintergreifen und somit das Anschlusselement festhalten. Diese Art von Konnektor bereitet Schwierigkeiten, wenn das Anschlusselement von dem Konnektor wieder getrennt werden soll. Ein zusätzlicher Ring zum Öffnen des Konnektors kann vorgesehen werden, wobei dieser Ring, wenn er in Axialrichtung in den Konnektor getrieben wird, die Arme radial nach außen auslenkt, um den Haltering des Anschlussabschnittes freizugeben. Hier kann eine ungewollte axiale Bewegung des zusätzlichen Ringes zur Freigabe bzw. Öffnung des Konnektors zur unbeabsichtigten Freigabe des Anschlusselementes führen.

Ein entsprechender, weitaus komplizierterer Anschlusskonntektor ist auch aus der DE 43 00 037 C1 bekannt, wobei bei diesem Anschlusskonnektor V-förmige Federarme Halteabschnitte zwischeneinander aufweisen und durch eine radiale Kompression beider V-förmiger Federabschnitte die Halteabschnitte in Führungen radial auswärts ausgelenkt werden, um eine Hintergriffserstreckung eines Anschlusselementes aufzunehmen. Nach Freigabe der V-förmigen Federabschnitte gehen die Halteabschnitte wieder radial einwärts und hintergreifen die Hintergriffserstreckung des Anschlusselementes. Bei diesem Konnektor kommt es ebenfalls allein auf die Flexibilität des Verriegelungselementes an und etwa bei niedrigen Temperaturen, wenn der Kunststoff aus dem das Verriegelungselement besteht, hart wird, können die Federelememte brechen bzw. es wird relativ schwierig, die Federelemente des Verriegelungselementes zu betätigen.

Die BE 479 098 A betrifft eine Schnellkupplung für Rohrleitungen und Leitungen in Saugschläuchen bzw. flexiblen Schläuchen, in welchen eine elastische Manschette, die frei in den Stutzen eindringt, in einer luftdichten bzw. wasserdichten Art und Weise an seinen Rand gedrängt wird, und zwar mit dem Stutzen des Leitungsstückes, dessen Manschette während der Einführung das Ansatzrohr des anderen Leitungsstückes in einer luftdichten bzw. wasserdichten Art und Weise umschließt, wobei ein Zentrierorgan (z.B. eine Buchse bzw. Hülse) mit der Manschette gedrängt wird und dieses bzw. diese in dem Stutzen zentriert wird und wobei das Ansatzrohr während der Montage und der Demontage zentral bzw. zentriert an der Manschette geführt wird.

Es ist eine Aufgabe gemäß der vorliegenden Erfindung, eine Verbindungseinrichtung vorzuschlagen, die die oben genannten Nachteile nicht aufweist. Insbesondere soll eine Verbindungseinrichtung geschaffen werden, bei der die Flexibilität des Materials des Verriegelungslementes nicht allein ausschlaggebend ist.

Gemäß der Erfindung werden die genannten Aufgaben wenigstens teilweise durch eine Verbindungseinrichtung gemäß dem Patentanspruch 1 gelöst. Zweckmäßige Ausführungsformen gehen aus den Unteransprüchen hervor.

Vorteilhafterweise weist das Verriegelungslement einen ersten Federarm mit dem Halteabschnitt auf, der sich von dem Betätigungselement bis vor eine dem Betätigungselement gegenüberliegende Wand des Gehäuses erstreckt, wobei der Federarm nahe bzw. an der gegenüberliegenden Wand mit einem Gelenkabschnitt ausgebildet ist.

Durch die Verwendung eines Gelenkabschnitts, insbesondere in der Form eine Kugelgelenks ist es möglich, wenigstens einen Teil der erforderlichen Arbeit zur Betätigung des Verriegelungselementes über den Gelenkabschnitt zu verrichten.

Vorteilhafterweise ist der Gelenkabschnitt an der gegenüberliegenden Wand in einer Gelenkaufnahme untergebracht. D.h., wenn der Gelenkabschnitt in der Form eines Kugelgelenkes vorgesehen ist, dass die Gelenkkugel in einer sphärischen Ausformung an der gegenüberliegenden Wand wenigstens teilweise aufgenommen ist. Allerdings kann der Gelenkabschnitt auch anders ausgebildet sein, indem beispielsweise das Ende des Federarmes nicht kugelartig ausgebildet ist, sondern lediglich als stumpfes Ende eines Stabes oder dgl., das dennoch auf der gegenüberliegenden Wand des Gehäuses bei Betätigung des Federarmes abwälzen kann, um die erforderlichen Bewegungen bzw. Freiheitsgrade zur Verfügung stellen zu können, um einen Verbindungsvorgang oder einen Entriegelungsvorgang vornehmen zu können.

Vorteilhaft ist es möglich, einen weiteren, zweiten Federarm spiegelsymmetrisch zum ersten Federarm vorzusehen, wobei der weitere, zweite Federarm an seinem der gegenüberliegenden Wand nahem Ende eine Gelenkaufnahme für den Gelenkabschnitt des ersten Federarms aufweisen kann. Auf diese Weise kann die Gelenkaufnahme auch unabhängig von der Ausbildung des Gehäuses an einem weiteren, zweiten Federarm vorgesehen werden. Somit können die Enden der hier verwendeten beiden Federarme insgesamt in einer bevorzugten Ausführungsform als vollständiges Kugelgelenk ausgebildet sein.

Vorteilhaft kann ein anderer zweiter Federarm vorgesehen sein, der spiegelsymmetrisch zum ersten Federarm vorgesehen ist, wobei der andere zweite Federarm einen Gelenkabschnitt aufweist, der in einer Gelenkaufnahme an der gegenüberliegenden Wand des Gehäuses untergebracht ist. Auch für diese gelenkartige Ausbildung kann eine kugelgelenkartige Konstruktion oder auch eine andere, wie oben beschriebene, Gelenkkonstruktion vorgesehen sein.

Um eine Verkantung des Betätigungselementes im Gehäuse vermeiden zu können, ist eine Führungseinrichtung für das Betätigungselement im Gehäuse vorgesehen. Ist beispielsweise das Betätigungselement als Betätigungsknopf ausgebildet, kann die Führungseinrichtung als Führungskanal oder -schacht ausgebildet sein, der das Betätigungselement verkantungsfrei zu führen vermag.

Um die Verformung bzw. die Auslenkung der Federarme besser kontrollieren und ausrichten zu können, kann der bzw. können die Federarme mit Schwenkabschnitten versehen sein. Diese Schwenkabschnitte können beispielsweise nach der Art einer Wippe oder eines Hebelarmes dafür sorgen, dass bei Betätigung des Betätigungselementes die Auslenkung bzw. Verformung der Federarme in einer wohl definierten Weise durchgeführt wird. Auf diese Weise lassen sich irgendwelche weiteren Führungen für die Federarme erübrigen, da die Schwenkabschnitte für eine definierte Auslenkung und Führung der Federarme und damit deren Halteabschnitte sorgen.

Vorteilhafterweise umfasst das Gehäuse einen oder mehrere Freilaufabschnitte. Diese Freilaufabschnitte dienen dazu, die Halteabschnitte aufzunehmen, wenn die Federarme ausgelenkt bzw. deformiert werden, um ein Anschlusselement mit dessen Haltering passieren zu lassen. Durch diese Ausbildung ist es möglich, das Gehäuse der Verbindungseinrichtung mit geringerem Materialaufwand kleiner auszubilden, da nur an den Stellen eine größere Erstreckung des Gehäuses erforderlich ist, wo ein größerer Bewegungsspielraum erforderlich ist.

Nachfolgend wird die vorliegende Erfindung unter Bezugnahme auf die beigefügten Darstellungen näher beschrieben. Dabei werden weitere Merkmale, Zielsetzungen und Vorzüge gemäß der Erfindung offenbart. In den Darstellungen zeigen:

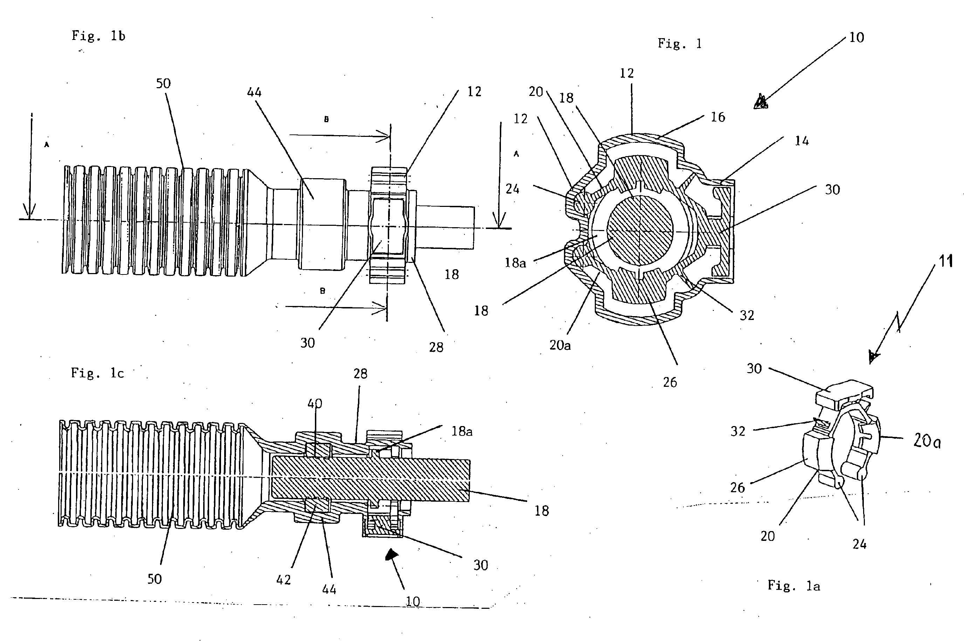

- Fig. 1 bis 1c: Eine Ausführungsform der Erfindung, wobei die Fig. 1 einen Querschnitt durch eine Verbindungseinrichtung, Fig. 1a perspektivisch ein Verriegelungselement, Fig. 1b eine Draufsicht auf eine Anschlussleitung mit Anschlussstutzen und Verriegelungseinrichtung und Fig. 1c einen Teilschnitt durch den Anschlussstutzen gemäß Fig. 1b in Axialrichtung zeigen; und

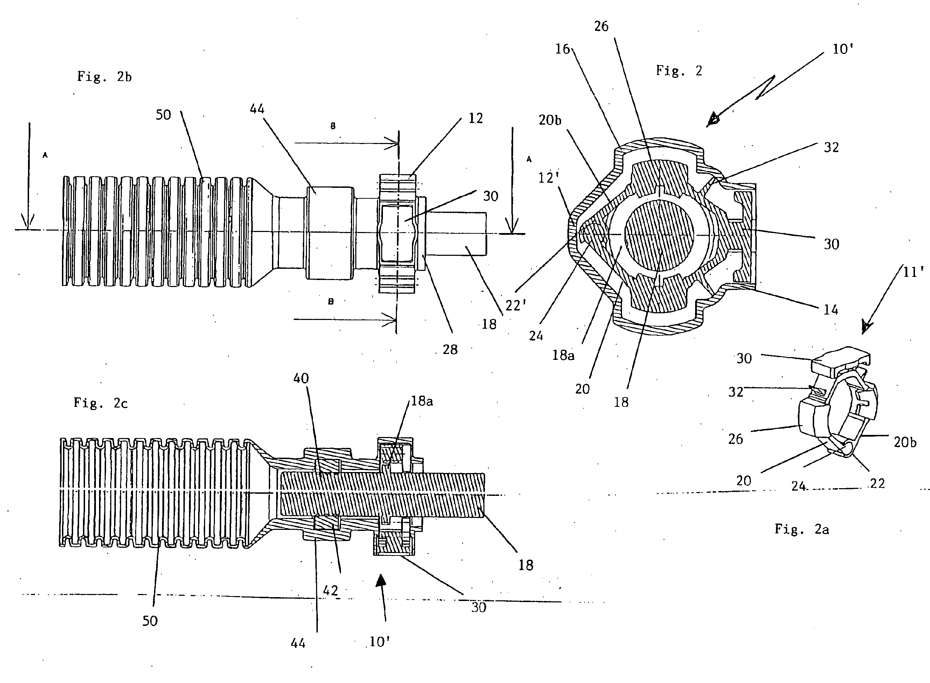

- Fig. 2 bis 2c: Ein Beispiel, das keine Ausführungsform der Erfindung ist sondern das Verständnis der Erfindung erleichtert, wobei Fig. 2 einen Querschnitt durch eine Verbindungseinrichtung, Fig. 2a eine perspektivische An- sicht eines Verriegelungselementes, Fig. 2b eine Ansicht einer Verbindungsleitung nebst Verbindungseinrichtung und Fig. 2c die Ansicht gemäß Fig. 2b jedoch mit einem teilweisen axialen Längsschnitt zeigen.

In den Figuren sind gleiche oder zumindest funktionsgleiche Abschnitte mit entsprechenden oder gleichen Bezugszeichen benannt. Eine mehrfache Beschreibung gleicher oder entsprechender Elemente erübrigt sich damit.

In der Fig. 1 ist eine erste Ausführungsform einer Verbindungseinrichtung allgemein durch das Bezugszeichen 10 benannt. Die Verbindungseinrichtung 10 umfasst ein Gehäuse 12 und innerhalb des Gehäuses 12 ein Verriegelungselement 11.

Das Gehäuse 12 umfasst einen Führungsabschnitt bzw. Führungskanal 14, der nach außen offen ist, so dass ein Betätigungselement 30 des Verriegelungslementes 11 von außen zugänglich ist und innerhalb des Führungskanals 14 geführt werden kann. Ein oder mehrere Freilaufabschnitte 16 sind vorgesehen, um bei Betätigung des Verriegelungselementes ausreichend Freiraum zur Verfügung zu stellen, um eine Öffnungsvorgang bewerkstelligen zu können.

Letztlich weist das Gehäuse 12 gegenüber dem Führungskanal 14 wenigstens eine Gelenkaufnahme 22 auf, wobei bei der dargestellten Ausführungsform gemäß den Figuren 1 bis 1c zwei Gelenkaufnahmen 22 vorgesehen sind, um Gelenkabschnitt 24 von zwei Federarmen 20, 20a abstützen bzw. teilweise aufnehmen zu können.

Das Verriegelungslement 11 umfasst das Betätigungselement 30, zwei getrennte Federarme 20, 20a, nämlich einen ersten Federarm 20 und einen zweiten weiteren Federarm 20a. Jedem der Federarme 20, 20a ist ein Halteabschnitt 26 zugeordnet, der eine Hintergriffserstreckung 18a eines Anschlusselementes 18 zu hintergreifen vermag. An den jeweiligen Enden der Federarme 20, 20a sind jeweilige Gelenkabschnitte 24 vorgesehen. Die Gelenkabschnitte 24 und die Gelenkaufnahmen 22 bilden im vorliegenden Falle kugelgelenkartige Einrichtungen. Der Federarm 20 und ggf. auch der Federarm 20a weisen Schwenkabschnitte 32 auf, die bei Betätigung des Betätigungselementes 30 für eine kontrollierte Verformung bzw. Auslenkung der Federarme und damit der Halteabschnitte 26 an den Federarmen sorgen, so dass reproduzierbar eine kontrollierte Freigabe der Hintergriffserstreckung 18a des Anschlusselementes 18 ermöglicht werden kann. Umgekehrt wird auch eine kontrollierte und reproduzierbare Rückbewegung der Halteabschnitte 26 bzw. der Federarme 20, 20a durch diese Schwenkabschnitte 32 begünstigt. Allerdings sind die Schwenkabschnitte 32 nur für eine reversible und kontrollierte Auslenkung der Halteabschnitte 26 förderlich, nicht aber unbedingt erforderlich.

Wird nun Druck auf das Betätigungselement bzw. den Betätigungsknopf 30 ausgeübt, werden die Gelenkabschnitte 24 in ihren Gelenkaufnahmen 22 gegeneinander verdreht, wodurch die Halteabschnitte 26 radial nach außen ausgelenkt werden. Die Schwenkabschnitte 32, denen bestimmte Führungsradien am Gehäuse zugeordnet sind, begünstigen die radial nach außen gerichtete Auslenkung der Halteabschnitte 26. Die Halteabschnitte 26 werden soweit nach außen ausgelenkt, dass sie die Hintergriffserstreckung 18a des Anschlusselementes 18 durchlassen. Anschließend wird der radial nach innen gerichtete Druck auf das Betätigungselement abgeschwächt, d.h., die Bedienungsperson übt keinen Druck mehr über ihre Finger oder ein Werkzeug aus, so dass durch die Federkraft der Federarme 20, 20a die Halteabschnitte 26 wieder radial einwärts bewegt werden, um die Hintergriffserstreckung 18a zu hintergreifen, um das Anschlusselement 18 sicher festzuhalten.

In der Fig. 1a ist das Verriegelungslement 11 nochmals perspektivisch dargestellt, wobei die offene, U-förmige Ausgestaltung des Verriegelungselementes 11 besser erkennbar wird.

Aus der Fig. 1b ist eine Verbindungsleitung 50 mit einem Stutzenabschnitt 28 zu erkennen, wobei im Bereich des Stutzenabschnittes 28 die Verbindungseinrichtung vorgesehen ist, deren Gehäuse 12 erkennbar ist. In der Draufsicht ist das Betätigungselement 30 erkennbar und aus dem Anschlussstutzen 28 schaut das angeschlossene Anschlusselement hervor.

Ein Zusatzhalteabschnitt 44 ist ebenfalls erkennbar, der vorgesehen sein kann, jedoch nicht vorgesehen sein muss. Über diesen Zusatzhalteabschnitt 44 kann eine zusätzliche Haltekraft und ggf. eine Dichtwirkung entfaltet werden.

In der Darstellung gemäß Fig. 1b ist erkennbar, dass die Fig. 1 einem Schnitt B-B entspricht, während die Darstellung gemäß Fig. 1c einem Schnitt A-A nach Fig. 1b entspricht.

Die Fig. 1c lässt die Lage der Hintergriffserstreckung 18a innerhalb der Verbindungseinrichtung bzw. des Konnektors gemäß dieser Ausführungsform nach der Erfindung erkennen. Der Wellrohrabschnitt 50 der Leitung geht in den Aufnahmeabschnitt bzw. Stutzen 28 über. Der Stutzen 28 umfasst neben der Verbindungseinrichtung 10 zusätzlich den Zusatzhalteabschnitt 44, der einen Haltering 42, beispielsweise in der Form eines Sprengringes oder dgl., enthalten kann. Ein Zahnabschnitt 40 des Anschlusselementes 18 kann in Axialrichtung zusätzlich eine Haltekraft aufbringen, die einem Ausreißen des Anschlusselementes 18 entgegenwirkt.

Andererseits kann der Ring 42 aus einem Dichtmaterial, etwa Gummi oder dgl., ausgebildet sein. Für diesen Fall kann der Ring 52 in Verbindung mit der Zahnung oder einer Dichtstruktur 40 am Anschlusselement 18 eine Dichtwirkung entfalten.

Das Rohr bzw. Wellrohr ist zusammen mit der Verbindungseinrichtung integral bzw. einstückig ausgebildet. Das Rohr bzw. Wellrohr 50 wird in einem Korrugator zusammen mit der Verbindungseinrichtung und insbesondere deren Gehäuse 12 hergestellt, so dass die erfindungsgemäße Verbindungseinrichtung nicht noch separat mit dem Rohr oder Wellrohr 50 verbunden werden muss.

Das Beispiel gemäß den Fig. 2 bis 2c stellt eine Verbindungseinrichtung 10' dar, die keine Ausführungsform der Erfindung ist, sondern das Verständnis der Erfindung erleichtert.

Im Unterschied zu der Ausführungsform gemäß den Fig. 1 bis 1c ist hier an einem Federarm, dem ersten Federarm 20, eine Gelenkkugel vorgesehen, während an dem anderen Federarm, dem anderen, zweiten Federarm 20b, eine Gelenkaufnahme 22' für die Gelenkkugel 24 vorgesehen ist. Die Gelenkaufnahme 22' kann, muss aber nicht, an der dem Betätigungselement 30 gegenüberliegenden Wand des Gehäuses 12' abgestützt sein.

Bei Ausübung einer radial einwärts gerichteten Kraft auf das Betätigungselement 30 dreht sich die Gelenkkugel 24 innerhalb der Gelenkaufnahme 22' und die Halteabschnitte 26 an den Federarmen 20, 20b werden radial nach außen ausgelenkt. Das Anschlusselement mit dessen Hintergriffserstreckung 18a kann nun durch das geöffneten Verriegelungselement 11' hindurch geschoben werden. Anschließend wird das Betätigungselement 30 wieder entlastet und die Rücktriebskraft der Federarme 20, 20b führt dazu, dass das Verriegelungselement 11' wieder geschlossen wird. Die Hintergriffserstreckung 18a kann nun, blockiert durch die Halteabschnitte 26 nicht mehr aus der Verbindungseinrichtung 10' herausgezogen werden.

## Patentansprüche

1. Verbindungseinrichtung für Rohre (10; 10') mit einem Gehäuse (12; 12') und mit einem Verriegelungselement (11; 11'), um ein zylindrisches Anschlusselement (18, 18a) aufzunehmen, wobei ein Betätigungselement (30) zur Entriegelung des Verriegelungselementes (11; 11') über eine Öffnung im Gehäuse (12; 12') zugänglich ist, und wobei das Verriegelungselement (11; 11') wenigstens einen Halteabschnitt (26) umfasst, wobei das Verriegelungselement (11; 11') einen ersten Federarm (20) und einen zweiten Federarm (20a; 20b) aufweist, wobei jedem der Federarme (20, 20a; 20b) ein Halteabschnitt (26) zugeordnet ist, wobei sich das Verriegelungselement (11; 11') innerhalb des Gehäuses (12; 12') befindet, wobei sich jeder der Federarme (20, 20a) mit dem Halteabschnitt (26) von dem Betätigungselement (30) bis vor eine dem Betätigungselement (30) gegenüberliegende Wand des Gehäuses (12; 12') erstreckt,
wobei das Ende des ersten Federarms (20) und das Ende des zweiten Federarms (20a) an der dem Betätigungselement (30) gegenüberliegenden Wand des Gehäuses (12; 12') jeweils mit einem Gelenkabschnitt (24) ausgebildet ist, **dadurch gekennzeichnet, dass** der jeweilige Gelenkabschnitt (24) an der gegenüberliegenden Wand jeweils in einer Gelenkaufnahme (22) untergebracht ist.

2. Verbindungseinrichtung nach Anspruch 1, **dadurch gekennzeichnet, dass** der, zweite Federarm (20b) an seinem der gegenüberliegenden Wand nahen Ende eine Gelenkaufnahme (22') für den Gelenkabschnitt (24) des ersten Federarmes (20) aufweist.

3. Verbindungseinrichtung nach Anspruch 1, **dadurch gekennzeichnet, dass** der andere, zweite Federarm (20a) im Wesentlichen symmetrisch zum ersten Federarm (20) vorgesehen ist, der einen Gelenkabschnitt aufweist, der in einer Gelenkaufnahme (22) an der gegenüberliegenden Wand des Gehäuses (12) untergebracht ist.

4. Verbindungseinrichtung nach einem der Ansprüche 1 bis 3, **dadurch gekennzeichnet, dass** das Gehäuse (12; 12') eine Führungseinrichtung (14) für das Betätigungselement (30) aufweist.

5. Verbindungseinrichtung nach einem der Ansprüche 1 bis 4, **dadurch gekennzeichnet, dass** der oder jeder der Federarme (20, 20a, 20b) einen Schwenkabschnitt (32) aufweist.

6. Verbindungseinrichtung nach einem der Ansprüche 1 bis 5, **dadurch gekennzeichnet, dass** das Gehäuse (12; 12') einen oder mehrere Freilaufabschnitte (16) aufweist, um den an dem oder jedem Federarm vorgesehenen Halteabschnitt (26) bei Betätigung des Betätigungselements (30) aufzunehmen.

7. Verbindungseinrichtung nach einem der Ansprüche 1 bis 6, **dadurch gekennzeichnet, dass** das Gehäuse (12; 12') der Verbindungseinrichtung einstückig bzw. integral mit einem Rohr oder Wellrohr (50) ausgebildet ist.

## Claims

1. A coupling device for pipes (10; 10') having a housing (12; 12') and having a locking element (11; 11') for receiving a cylindrical connecting element (18, 18a), an operating element (30) for releasing the locking element (11; 11') being accessible by way of an opening in the housing (12; 12'), and the locking element (11; 11') including at least one holding portion (26), the locking element (11; 11') comprising a first spring arm (20) and a second spring arm (20a; 20b), a holding portion (26) being associated with each of the spring arms (20, 20a; 20b), the locking element (11; 11') being situated inside the housing (12; 12'), each of the spring arms (20, 20a) with the holding portion (26) extending from the operating element (30) to in front of a wall of the housing (12; 12') opposite the operating element (30), the end of the first spring arm (20) and the end of the second spring arm (20a) in each case being constructed with a joint portion (24) at the wall of the housing (12; 12') opposite the operating element (30),
**characterised in that** the respective joint portion (24) is in each case accommodated in a joint socket (22) on the opposite wall.

2. A coupling device according to Claim 1,
**characterised in that** the second spring arm (20b) at its end close to the opposite wall comprises a joint socket (22') for the joint portion (24) of the first spring arm (20).

3. A coupling device according to Claim 1,
**characterised in that** the other, second spring arm (20a) is substantially symmetrical to the first spring arm (20), which comprises a joint portion that is accommodated in a joint socket (22) on the opposite wall of the housing (12).

4. A coupling device according to one of Claims 1 to 3,
**characterised in that** the housing (12; 12') comprises a guide device (14) for the operating element (30).

5. A coupling device according to one of Claims 1 to 4,
**characterised in that** the spring arm or each of the spring arms (20, 20a, 20b) has a pivotable portion (32).

6. A coupling device according to one of Claims 1 to 5,
**characterised in that** the housing (12; 12') comprises one or more free movement portions (16) for receiving the holding portion (26) provided on the or each spring arm upon the operation of the operating element (30).

7. A coupling device according to one of Claims 1 to 6,
**characterised in that** the housing (12; 12') of the coupling device is constructed in one piece or integrally with a pipe or a corrugated pipe (50).

## Revendications

1. Dispositif de raccordement pour tuyaux (10 ; 10') avec un boîtier (12 ; 12') et avec un élément de verrouillage (11 ; 11'), destiné à recevoir un élément de raccordement (18, 18a) cylindrique, dans lequel un organe de manipulation (30) pour le déverrouillage de l'élément de verrouillage (11 ; 11') est accessible à travers une ouverture du boîtier (12 ; 12'), et dans lequel l'élément de verrouillage (11 ; 11') comprend au moins une partie de retenue (26), dans lequel l'élément de verrouillage (11 ; 11') présente un premier bras élastique (20) et un deuxième bras élastique (20a ; 22b), une partie de retenue (26) étant associée à chacun des bras élastiques (20, 20a ; 20b), dans lequel l'élément de verrouillage (11 ; 11') se trouve à l'intérieur du boîtier (12 ; 12'), dans lequel chacun des bras élastiques (20, 20a) avec la partie de retenue (26) s'étend de l'organe de manipulation (30) jusqu'au devant d'une paroi du boîtier (12 ; 12') opposée à l'organe de manipulation (30), dans lequel l'extrémité du premier bras élastique (20) et l'extrémité du deuxième bras élastique (20a) sont réalisées respectivement avec une partie d'articulation (24), sur la paroi du boîtier (12 ; 12') opposée à l'organe de manipulation (30), **caractérisé en ce que** la partie d'articulation (24) respective est logée respectivement dans un logement d'articulation (22) sur la paroi opposée.

2. Dispositif de raccordement selon la revendication 1, **caractérisé en ce que** le deuxième bras élastique (20b) présente, à l'extrémité à proximité de la paroi opposée, un logement d'articulation (22') pourla partie d'articulation (24) du premier bras élastique (20).

3. Dispositif de raccordement selon la revendication 1, **caractérisé en ce que** l'autre deuxième bras élastique (20a) est sensiblement symétrique du premier bras élastique (20), et présente une partie d'articulation qui est logée dans un logement d'articulation (22) sur la paroi opposée du boîtier (12).

4. Dispositif de raccordement selon l'une des revendications 1 à 3, **caractérisé en ce que** le boîtier (12 ; 12') présente un dispositif de guidage (14) pour l'organe de manipulation (30).

5. Dispositif de raccordement selon l'une des revendications 1 à 4, **caractérisé en ce que** le ou chaque bras élastique (20, 20a, 20b) présente une partie pour la rotation (32).

6. Dispositif de raccordement selon l'une des revendications 1 à 5, **caractérisé en ce que** le boîtier (12 ; 12') présente une ou plusieures parties de roue libre (16), pour recevoir la partie de retenue (26) prévue sur l'un ou l'autre des bras élastiques, lors de la manipulation de l'élément de manipulation (30).

7. Dispositif de raccordement selon l'une des revendications 1 à 6, **caractérisé en ce que** le boîtier (12 ; 12') du dispositif de raccordement est réalisé en une seule pièce ou fait partie intégrante d'un tuyau ou d'un tuyau cannelé (50).
